# EUROPEAN PATENT SPECIFICATION

(11) **EP 3 188 085 B1**
(45) Date of publication and mention of the grant of the patent: **11.11.2020**
(21) Application number: 15836135.2
(22) Date of filing: 13.02.2015
(51) Int. Cl.: G06K 19/077, G06K 19/07

(54) **ACTIVE 13.56MHZ RFID DEVICE**
AKTIVE 13,56-MHZ-RFID-VORRICHTUNG
DISPOSITIF RFID ACTIF ET CADENCÉ À 13,56 MHZ

(30) Priority: 26.08.2014 CN 201410425876
(43) Date of publication of application: 05.07.2017
(73) Proprietor: Beijing Watchdata System Co. Ltd., Beijing 100102 (CN)
(72) Inventor: HAN, Jing, Chaoyang District, Beijing 100102 (CN)
(74) Representative: Global IP Europe Patentanwaltskanzlei
(86) International application number: PCT/CN2015/072992
(87) International publication number: WO 2016/029665

(56) References cited:
- CN-A- 101 271 533
- CN-A- 102 831 450
- CN-A- 104 217 242
- CN-U- 202 677 467
- CN-U- 203 038 312
- CN-U- 204 044 863

## Description

### TECHNICAL FIELD OF THE INVENTION

The invention relates to the technical field of 13.56MHz RF communication and particularly relates to a small-sized active RFID device of 13.56MHz.

### PRIOR ART OF THE INVENTION

In the prior art, the small-sized RFID (abbreviation of radio frequency identification device) passive contactless IC card of 13.56MHz (high frequency) cannot be infinitely small in size when being used in a complicated contactless environment. However, with continuous development in technology and market of the 13.56MHzRFID technology, it calls on a request for a smaller-sized contactless IC card which for example, can be deployed in a wrist band. However, due to limited size of the card, the passive contactless IC card is of weak contactless function. As a result, it is difficult to meet requirements of usage on a product. The problem can only be solved by a smaller-sized active contactless IC card.

The present solution of active 13.56MHz RFID is mostly applied in the mobile payment field, for example, applied in a mobile phone payment card SIMPASS or applied by deploying an RF front-end chip and an antenna on a common SIM card. In case that the card using the above solution is deployed in a mobile phone, it can be of function of contactless swiping card, but is restricted by usage scenario and size. In order to solve this problem, the small-sized active RFID device of 13.56MHz is provided by the invention.

CN 202677467U discloses an active RFID device of 13.56MHz comprising a main body on which an SE chip, an interface and an internal antenna are deployed, wherein the device further comprises an RF front-end chip and the interface comprises an ISO/IEC7816 interface for operating the SE chip. This prior art is acknowledged in the preamble of claim 1.

### SUMMARY OF THE INVENTION

Purposing at avoiding shortcoming in the prior art, an active RFID device of 13.56MHz is provided by the invention, which meets the requirement on usage of a contactless IC card better.

The invention is defined by claim 1.

An active RFID device of 13.56MHz includes a main body on which an SE chip, an interface and an internal antenna are deployed, and an RF front-end chip; wherein the interface includes a power interface, an ISO/IEC7816 interface for operating the SE chip and an SPI interface for setting parameters for a register of the RF front-end antenna and the RF front-end chip is coupled to a reader antenna via the internal antenna, an external antenna, or a combination of the internal antenna and the external antenna.

In case that the RF front-end chip is connected with the internal antenna, specifically the internal antenna is connected with RF I/O of the RF front-end chip.

In case that the RF front-end chip is connected with the external antenna, specifically the external antenna is connected with RF I/O of the RF front-end chip.

In case that the RF front-end chip is connected with the combination of the internal antenna and the external antenna, specifically the internal antenna is firstly connected in parallel with the external antenna and then connected with RF I/O of the RF front-end chip, or the internal antenna is firstly connected in series with the external antenna and then connected with RF I/O of the RF front-end chip.

The RF I/O of the RF front-end chip and both ends of the internal antenna are suspended, and the connection between the RF I/O of the RF front-end chip and the internal antenna is completed according to the selected mode as required.

Further, in the active RFID device of 13.56MHz, the power interface is separately connected with a power pin of the SE chip and a power pin of the RF front-end chip, or solely connected with the power pin of the RF front-end chip.

Further, in the active RFID device of 13.56MHz, the main body is a circuit board.

Furthermore, in the active RFID device of 13.56MHz, the device is welded on other circuit board through a pad.

Even further, in the active RFID device of 13.56MHz, a size of the packaged device is 8.4mmx6mm.

Advantage of the invention lies in that the active RFID device of 13.56MHz has been deployed with an internal antenna and in case that the internal antenna does not meet a requirement, the internal antenna can be switched into an external antenna or can be in combination with the external antenna for different requirements on usage of a card. The device can be applied in all kinds of wearable device, for example in a watch, in a wrist band, or in other active RFID system of 13.56MHz, and ensures better contactless function.

### Description of drawings

Figure 1 is a structural diagram of the active RFID device of 13.56MHz disclosed by an embodiment of the invention;
Figure 2 is a working principle illustration of the active RFID device of 13.56MHz disclosed by the embodiment of the invention;
Figure 3 is an illustration of connection between the RF front-end chip and the internal antenna disclosed by the embodiment of the invention;
Figure 4 is an illustration of connection between the RF front-end chip and the external antenna disclosed by the embodiment of the invention;
Figure 5 is an illustration of connection between the RF front-end chip and combined antenna which specifically is a parallel connection between the internal antenna and the external antenna, disclosed by the embodiment of the invention; and
Figure 6 is an illustration of connection of the RF front-end chip and combined antenna which specifically is a series connection between the internal antenna and the external antenna.

### Embodiment

A detailed description of the invention is provided by embodiment in combination with the accompanying drawings.

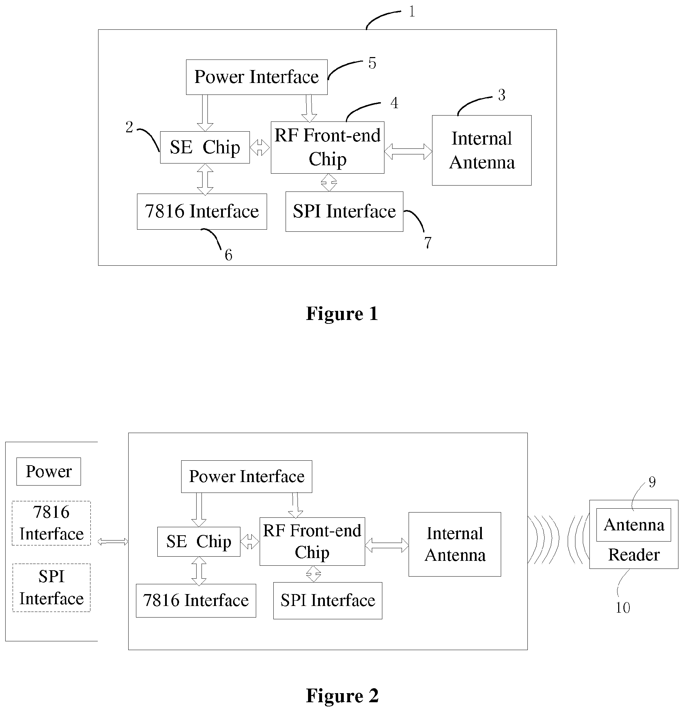

As illustrated in Figure 1, a structural diagram of an active RFID device of 13.56MHz disclosed by the embodiment of the invention, the device includes four parts on a main body 1, which separately are an SE chip 2, an RF front-end chip 4, an interface and an internal antenna 3. The interface includes a power interface 5, an ISO/IEC7816 interface 6 for operating the SE chip 2 and an SPI interface 7 for setting parameters for a register of the RF front-end chip. The RF front-end chip 4 is coupled to a reader antenna 9 via the internal antenna 3 or an external antenna 8 or via a combination of the internal antenna 3 and the external antenna 8.

As shown in Figure 2, an illustration of working principle of the active RFID device of 13.56MHz disclosed by the embodiment of the invention, the SE chip 2 is of a function of writing and storing data and what is stored in the storage of the SE chip 2 can be conditionally read by an external device as required or can be processed or determined for internal information. Also, in order to prevent vicious resolution and attack from outside and ensure security of data, encryption/decryption algorithm is stored in the SE chip 2. The SE chip 2 responses to received data and sends the responded data to the RF front-end chip.

The RF front-end chip 4 is for demodulating signal of the reader 10 being obtained by antenna coupling and sending the demodulated signal to the SE chip 2; or for modulating a received response signal of the SE chip 2 and sending the modulated signal to the reader10 via an antenna.

The power interface 5 of the interface is for supplying DC voltage to whole circuit of the device. In the embodiment, the power interface 5 can be connected separately with a power pin of the SE chip 2 and a power pin of the RF front-end chip 4 or solely connected with the power pin of the RF front-end chip 4.

Specifically, when the device is on running, an external power source can directly supply power to the SE chip 2 and the RF front-end chip 4 through the power interface 5; or the power interface 5 only supplies power to the RF front-end chip 4 and the RF front-end chip 4 itself outputs voltage to the SE chip 2 for power supply. In the latter case, the SE chip can be powered by setting parameters for a register of the RF front-end chip through an SPI(abbreviation of Serial Peripheral Interface); or controlling whether to output voltage to the SE chip can be made by connecting the RF front-end chip 4 with an external controlling port, such as an MCU port; or the SE chip can be powered by the RF front-end chip 4 through an analogue contactless channel in which signal is transferred between the RF front-end chip 4 and the SE chip.

The ISO/IEC7816 interface 6 is for operating the SE chip 2, for example, writing or reading data.

The SPI interface 7 is for setting parameters for register of the RF front-end chip 4.

The internal antenna 3 is for coupling to the external reader antenna 9 for data wave interaction.

The main body 1 of the embodiment is a circuit board, which can be welded on other circuit board, such as a PCB board, through a pad. The RFID device of the invention can be made in a small enough size for usage in more scenarios. For example, the device can be packaged in a size of 8.4mmx6mm.

The RFID device of the embodiment makes data interaction with the reader 10 by coupling the internal antenna 3 or the external antenna 8 or a combination of the internal antenna 3 and the external antenna 8 to the reader antenna 9 for optimization of contactless function in different application scenarios. It specifically includes methods as follows.

### First, internal antenna mode

In case that the internal antenna 3 inside the device meets a requirement on usage and is not necessarily connected with the external antenna 8, which is that the RF front-end chip 4 is directly connected with the internal antenna 3, the internal antenna 3 is connected with RF I/O pin of the RF front-end chip 4.

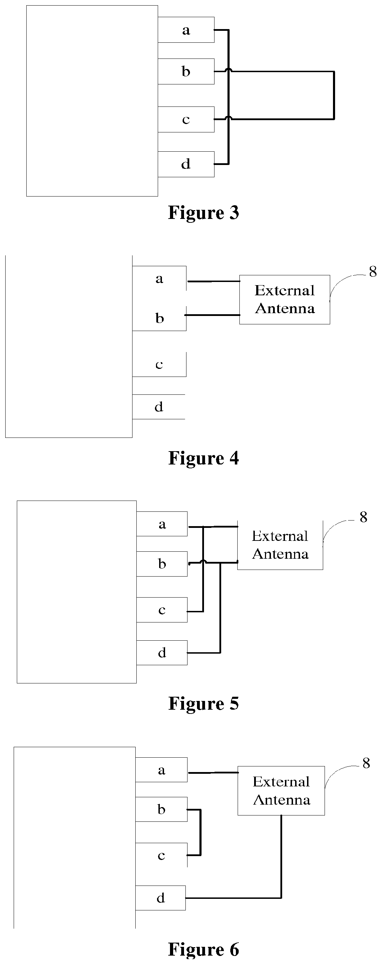

As illustrated in Figure 3, Pin a and Pin b separately refer to an input end and an output end of the RF front-end chip including the peripheral circuit and Pin c and Pin d refer to two ends of the internal antenna 3 inside the device. Pin a is connected with the Pin d and Pin b (Antenna2) is connected with Pin c (Antenna3).

### Second, external antenna mode

In case that the internal antenna 3 does not meet requirement and the external antenna 8 is needed, which is that the RF front-end chip 4 is directly connected with the external antenna 8, the external antenna 8 is connected with I/0 pin of the RF front-end chip 4.

As illustrated in Figure 4, Pin a and Pin b are connected with two ends of the external antenna 8 and both Pin c and Pin d of the internal antenna 3 are suspended without any connection.

### Third, combined antenna mode

In case that single usage of the internal antenna 3 or the external antenna 8 is not feasible, combination of the internal antenna 3 and the external antenna 8 are required. In the embodiment, two combination methods are used. One is parallel connection between the internal antenna 3 and the external antenna 8 and another is series connection between the internal antenna 3 and the external antenna 8. Specifically, the internal antenna is firstly connected in parallel or series with the external antenna and then connected with the RF front-end chip.

In case that the internal antenna 3 is connected in parallel with the external antenna 8, one end of RF I/O of the RF front-end chip 4 and one end of the internal antenna 3 are both connected with one end of the external antenna 8 while the other end of RF I/O of the RF front-end chip 4 and the other end of the internal antenna 3 are both connected with the other end of the external antenna 8. As illustrated in Figure 5, Pin a and Pin c are connected with one end of the external antenna 8 while Pin b and Pin d are connected with the other end of the external antenna 8.

In case that the internal antenna 3 is connected in series with the external antenna8, one end of RF I/O of the RF front-end chip 4 is connected with one end of the internal antenna 3 while the other end of RF I/O of the RF front-end chip 4 and the other end of the internal antenna 3 are separately connected with two ends of the internal antenna 8. As illustrated in Figure 6, Pin a is connected with one end of the external antenna 8, Pin d is connected with the other end of the external antenna 8 and Pin b is connected with Pin c.

The RFID device being disclosed by the invention can be packaged into an independent application module. In process of manufacturing it, RF I/O of the RF front-end chip 4 and both ends of the internal antenna 3 are suspended. However, in practice, one of the above connection modes is applied as required and the connection is completed according to the selected mode.

It is noted that the RF front-end chip 4 of the embodiment includes an RF chip and its peripheral circuit. In an operating circuit, the RF front-end chip 4 is connected with other parts through its peripheral circuit. In the embodiment, whichever of the internal antenna 3 or the external antenna 8 or combination of the internal antenna and the external antenna is connected with I/O of the RF front-end chip 4, it is connected with the peripheral circuit of RF I/O of the RF front-end chip 4. Moreover, the above Pins a, b, c and d are just for illustration in which connection between Pin a and Pin b, Pin c and Pin d can be exchanged; and the terms "internal" and "external" being used by the above internal antenna and external antenna are not of substantial meaning and are only description for deciding whether the antenna is deployed inside the device or not.

Obviously, a person with ordinary skill in the art can make all kinds of changes and modifications to the invention within the principle and scope of the invention as defined by the appended claims.

## Claims

1. An active RFID device of 13.56MHz comprising a main body, and comprising an SE chip (2), an interface and an internal antenna (3) deployed on the main body, wherein
the device further comprises an RF front-end chip (4) and
the interface comprises an ISO/IEC7816 interface for operating the SE chip (2),
**characterized in that**:
the interface further comprises a power interface (5) and an SPI interface (7) for setting parameters for a register of the RF front-end chip (4);
the RF front-end chip (4) is coupled to a reader antenna (9) via the internal antenna (3), an external antenna (8), or a combination of the internal antenna (3) and the external antenna (8);
in an internal antenna mode in which the RF front-end chip (4) is connected with the internal antenna (3), specifically the internal antenna (3) is connected with RF I/O pins of the RF front-end chip (4),
in an external antenna mode in which the RF front-end chip (4) is connected with the external antenna (8), specifically the external antenna (8) is connected with RF I/O pins of the RF front-end chip (4);
in a combined antenna mode in which the RF front-end chip (4) is connected with the combination of the internal antenna (3) and the external antenna (8), specifically the internal antenna (3) is firstly connected in parallel with the external antenna (8) and then connected with RF I/O pins of the RF front-end chip (4), or the internal antenna (3) is firstly connected in series with the external antenna (8) and then connected with RF I/O pins of the RF front-end chip (4); and
the RF I/O pins of the RF front-end chip (4) and both ends of the internal antenna (3) are suspended without any connection in the external antenna mode, and the connection between the RF I/O pins of the RF front-end chip (4) and the internal antenna (3) is applied in the internal antenna mode or the combined antenna mode.

2. The active RFID device of 13.56MHz of claim 1, wherein the power interface (5) is separately connected with a power pin of the SE chip (2) and a power pin of the RF front-end chip (4), or solely connected with the power pin of the RF front-end chip (4).

3. The active RFID device of 13.56MHz of claim 1, wherein the main body (1) is a circuit board.

4. The active RFID device of 13.56MHz of claim 3, wherein the device is welded on other circuit board through a pad.

5. The active RFID device of 13.56MHz of claim 3, wherein a size of the packaged device is 8.4mmx6mm.

## Patentansprüche

1. Aktive 13,56 MHz-RFID-Vorrichtung, die einen Hauptkörper aufweist und einen SE-Chip (2), eine Schnittstelle und eine interne Antenne (3) aufweist, die am Hauptkörper eingesetzt ist, wobei
die Vorrichtung ferner einen HF-Eingangschip (4) aufweist, und
die Schnittstelle eine ISO/IEC7816-Schnittstelle zum Betreiben des SE-Chips (2) aufweist,
**dadurch gekennzeichnet, dass**:
die Schnittstelle ferner eine Stromschnittstelle (5) und eine SPI-Schnittstelle (7) zum Einstellen von Parametern für ein Register des HF-Eingangschips (4) aufweist;
der HF-Eingangschip (4) über die interne Antenne (3), eine externe Antenne (8) oder eine Kombination der internen Antenne (3) und der externen Antenne (8) mit einer Leseantenne (9) gekoppelt ist;
in einem internen Antennenmodus, in dem der HF-Eingangschip (4) mit der internen Antenne (3) verbunden ist, insbesondere die interne Antenne (3) mit HF-I/O-Stiften des HF-Eingangschips (4) verbunden ist,
in einem externen Antennenmodus, in dem der HF-Eingangschip (4) mit der externen Antenne (8) verbunden ist, insbesondere die externe Antenne (8) mit HF-I/O-Stiften des HF-Eingangschips (4) verbunden ist;
in einem kombinierten Antennenmodus, in dem der HF-Eingangschip (4) mit der Kombination der internen Antenne (3) und der externen Antenne (8) verbunden ist, insbesondere die interne Antenne (3) zunächst parallel mit der externen Antenne (8) geschaltet ist und dann mit HF-I/O-Stiften des HF-Eingangschips (4) verbunden ist, oder die interne Antenne (3) zunächst in Reihe mit der externen Antenne (8) geschaltet ist und dann mit HF-I/O-Stiften des HF-Eingangschips (4) verbunden ist; und
die HF-I/O-Stifte des HF-Eingangschips (4) und beide Enden der internen Antenne (3) im externen Antennenmodus ohne jede Verbindung schwebend sind, und die Verbindung zwischen den HF-I/O-Stiften des HF-Eingangschips (4) und der internen Antenne (3) im internen Antennenmodus oder im kombinierten Antennenmodus angewendet wird.

2. Aktive 13,56 MHz-RFID-Vorrichtung nach Anspruch 1, wobei die Stromschnittstelle (5) getrennt mit einem Stromstift des SE-Chips (2) und einem Stromstift des HF-Eingangschips (4) verbunden ist, oder ausschließlich mit dem Stromstift des HF-Eingangschips (4) verbunden ist.

3. Aktive 13,56 MHz-RFID-Vorrichtung nach Anspruch 1, wobei der Hauptkörper (1) eine Leiterplatte ist.

4. Aktive 13,56 MHz-RFID-Vorrichtung nach Anspruch 3, wobei die Vorrichtung durch eine Anschlussfläche an eine andere Leiterplatte geschweißt ist.

5. Aktive 13,56 MHz-RFID-Vorrichtung nach Anspruch 3, wobei eine Größe der verpackten Vorrichtung 8,4 mmx6 mm beträgt.

## Revendications

1. Dispositif RFID actif cadencé à 13,56MHz, comprenant un corps principal, et pourvu d'une puce SE (2), d'une interface et d'une antenne interne (3) are déployée sur le corps principal, où
ledit dispositif comprend en outre une puce radiofréquence frontale (4) et
l'interface comprend une interface ISO/IEC7816 pour l'activation de la puce SE (2),
**caractérisé en ce que** :
l'interface comprend en outre une interface d'alimentation (5) et une interface SPI (7) pour le réglage de paramètres pour un registre de la puce radiofréquence frontale (4) ;
la puce radiofréquence frontale (4) est reliée à une antenne de lecteur (9) par l'intermédiaire de l'antenne interne (3), d'une antenne externe (8), ou d'une combinaison de l'antenne interne (3) et de l'antenne externe (8) ;
dans un mode d'antenne interne où la puce radiofréquence frontale (4) est connectée à l'antenne interne (3),
l'antenne interne (3) est spécifiquement connectée à des broches radiofréquence d'entrée/sortie de la puce radiofréquence frontale (4),
dans un mode d'antenne externe où la puce radiofréquence frontale (4) est connectée à l'antenne externe (8),
l'antenne externe (8) est spécifiquement connectée à des broches radiofréquence d'entrée/sortie de la puce radiofréquence frontale (4) ;
dans un mode d'antenne combiné où la puce radiofréquence frontale (4) est connectée à la combinaison de l'antenne interne (3) et de l'antenne externe (8), l'antenne interne (3) est d'abord spécifiquement connectée en parallèle à l'antenne externe (8), puis avec des broches radiofréquence d'entrée/sortie de la puce radiofréquence frontale (4), ou l'antenne interne (3) est d'abord connectée en série avec l'antenne externe (8), puis connectée avec des broches radiofréquence d'entrée/sortie de la puce radiofréquence frontale (4) ; et
les broches radiofréquence d'entrée/sortie de la puce radiofréquence frontale (4) et les deux extrémités de l'antenne interne (3) sont suspendues sans connexion dans le mode d'antenne externe, et la connexion entre les broches radiofréquence d'entrée/sortie de la puce radiofréquence frontale (4) et l'antenne interne (3) est appliquée dans le mode d'antenne interne ou le mode d'antenne combiné.

2. Dispositif RFID actif cadencé à 13,56MHz selon la revendication 1, où l'interface d'alimentation (5) est connectée séparément à une broche d'alimentation de la puce SE (2) et une broche d'alimentation de la puce radiofréquence frontale (4), ou connectée uniquement à la broche d'alimentation de la puce radiofréquence frontale (4) .

3. Dispositif RFID actif cadencé à 13,56MHz selon la revendication 1, où le corps principal (1) est une carte de circuit.

4. Dispositif RFID actif cadencé à 13,56MHz selon la revendication 3, où le dispositif est soudé par pastille sur une autre carte de circuit.

5. Dispositif RFID actif cadencé à 13,56MHz selon la revendication 3, où le dispositif emballé a une dimension de 8,4mm×6mm.
